# EUROPÄISCHE PATENTSCHRIFT

(11) **EP 3 873 689 B1**
(45) Veröffentlichungstag und Bekanntmachung des Hinweises auf die Patenterteilung: **02.10.2024**
(21) Anmeldenummer: 19801778.2
(22) Anmeldetag: 01.11.2019
(51) Int. Cl.: B22D 19/00, B22D 19/04, G01M 5/00

(54) **VORRICHTUNG ZUR ERKENNUNG MECHANISCHER BELASTUNGEN UND/ODER VERFORMUNGEN IN EINEM GUSSBAUTEIL UND VERWENDUNG DIESER VORRICHTUNG**
DEVICE FOR DETECTING MECHANICAL STRESSES AND/OR DEFORMATIONS IN A CAST COMPONENT AND USE OF DEVICE THEREOF
DISPOSITIF DE DÉTECTION DE CONTRAINTES MÉCANIQUES ET/OU DE DÉFORMATIONS DANS UNE PIECE COULEE ET UTILISATION DE CE DISPOSITIF

(30) Priorität: 02.11.2018 DE 102018218773
(43) Veröffentlichungstag der Anmeldung: 08.09.2021
(73) Patentinhaber: Fraunhofer-Gesellschaft zur Förderung der angewandten Forschung e.V., 80686 München (DE)
(72) Erfinder: PILLE, Christoph, 28359 Bremen (DE); WÖSTMANN, Franz-Josef, 28359 Bremen (DE); FISCHER, Martin, 28359 Bremen (DE)
(74) Vertreter: Pfenning, Meinig & Partner mbB
(86) Internationale Anmeldenummer: PCT/EP2019/079991
(87) Internationale Veröffentlichungsnummer: WO 2020/089464

(56) Entgegenhaltungen:
- DE-A1- 102005 016 402
- US-A- 3 286 513
- US-A1- 2013 342 186
- RICO TIEDEMANN ET AL: "Sensor Integration in Castings Made of Aluminum - New Approaches for Direct Sensor Integration in Aluminum High Pressure Die Casting", KEY ENGINEERING MATERIALS, vol. 742, 1 July 2017 (2017-07-01), pages 786 - 792, XP055650202, DOI: 10.4028/www.scientific.net/KEM.742.786
- KESAVAN K ET AL: "Experimental studies on fiber optic sensors embedded in concrete", MEASUREMENT, INSTITUTE OF MEASUREMENT AND CONTROL. LONDON, GB, vol. 43, no. 2, 1 February 2010 (2010-02-01), pages 157 - 163, XP026801537, ISSN: 0263-2241, [retrieved on 20090904]
- MAHESHWAR GHIMIRE ET AL: "In situ monitoring of prestressed concrete using embedded fiber loop ringdown strain sensor", MEASUREMENT., vol. 124, 1 August 2018 (2018-08-01), GB, pages 224 - 232, XP055650205, ISSN: 0263-2241, DOI: 10.1016/j.measurement.2018.04.017

## Beschreibung

Die vorliegende Erfindung betrifft eine Vorrichtung zur Erkennung mechanischer Belastungen und/oder Verformungen in einem Gussbauteil, umfassend ein Gussbauteil sowie ein Steuergerät zur Abgabe eines Signals, wobei das Gussbauteil einen Gussgrundkörper und mindestens einen zumindest teilweise in den Gussgrundkörper eingebetteten Sensor zur Erkennung mechanischer Belastungen und/oder Verformungen des Gussbauteils umfasst. Das Steuergerät ist so konfiguriert, dass ein Signal abgegeben wird, wenn der mindestens eine Sensor eine bestimmte mechanische Belastung und/oder Verformung des Gussbauteils erkennt. Der mindestens eine Sensor ist in Form mindestens eines Kurzschlusselementes oder in Form mindestens eines Lichtleiters ausgebildet. Das Kurzschlusselement umfasst mindestens eine elektrisch leitfähige Komponente und mindestens eine elektrisch isolierende Komponente, die die mindestens eine elektrisch leitfähige Komponente gegenüber dem Gussgrundkörper elektrisch isoliert. Erfindungsgemäß ist der mindestens eine Sensor so ausgebildet und angeordnet, dass ab der bestimmten mechanischen Belastung und/oder Verformung des Gussbauteils eine elektrische Verbindung oder eine Lichtleitung im mindestens einen Sensor unterbrochen oder hergestellt wird, wobei aus dem Unterbrechen oder Herstellen der elektrischen Verbindung oder der Lichtleitung das Signal resultiert, welches die Registrierung der bestimmten mechanischen Belastung bzw. Verformung des Gussbauteils durch den Sensor anzeigt. Zudem betrifft die vorliegende Erfindung auch die Verwendung der erfindungsgemäßen Vorrichtung.

Gussbauteile, vorzugsweise aus Kunststoff oder (Leicht-)Metall gefertigt, werden konstruktiv überdimensioniert, damit sie sowohl dem üblichen Lastfall entsprechen als auch bei starker und außergewöhnlich starker Belastung standhalten. Ein Bauteilversagen aufgrund von Materialversagen soll somit verhindert werden.

Insbesondere im Fall einer nur lokal erforderlichen Überdimensionierung einzelner Bauteilbereiche, z.B. von Verbindungsstellen/Verbindungsflanschen bei Fahrwerkskomponenten (wie bspw. einem Schwenklager beim Pkw-Fahrwerk) kann es erforderlich sein:
- das gesamte Gussbauteil konstruktiv überdimensioniert auszuführen resultierend in nicht erforderlicher Gewichtserhöhung,
- das Gussbauteil einer kostenintensiven thermischen Wärmebehandlung zu unterziehen, um die mechanischen Kennwerte des Gussmaterials zu steigern, oder
- die lokale Stelle mit hoher Belastungsanforderung technisch aufwändig lokal zu verstärken, z.B. durch integrierte Verstärkungselemente oder -strukturen.

Die beschriebene konstruktive Überdimensionierung resultiert in der Regel in zusätzlichem Materialgewicht und somit einem für den üblichen Betriebs- und Lastfall nicht erforderlich hohen Bauteilgewicht. Insbesondere in der Fahrzeugtechnik steht eine konstruktive Überdimensionierung der Gussteile im Widerspruch zum angestrebten Leichtbauziel.

Der zunehmende Wandel in der Nutzungsweise von Fahrzeugen erfordert sowohl Leichtbaulösungen als auch die damit verbundene Relevanz zur Überwachung von Fehl- und Missbrauchslasten innerhalb der Leichtbaukomponenten, um diese vor Überlastung und Bauteilversagen zu schützen. Dieser Wandel ergibt sich v.a. durch folgende Entwicklungen:
Der zunehmende Anteil an elektrisch angetriebenen Fahrzeugen fordert nach Leichtbaulösungen, um die hohen Batteriegewichte zu kompensieren. Die Gussteile werden filigraner und zugleich anfälliger für Fehl- oder Überlastung. Zukünftig steigt der Anteil an Fahrzeugen, die im CarSharing betrieben werden und somit einem hohen Nutzerwechsel mit entsprechendem Wechsel des Nutzerverhaltens unterliegen. Zugleich sinkt die persönliche Bindung des Fahrers zum Fahrzeug aufgrund von fehlendem Eigentumsverhältnis und somit sinkt auch der sorgsame Umgang mit dem Fahrzeug. Gleichermaßen wächst das Interesse der CarSharing-Betreiber am Nutzungsverhalten und Umgang mit den Fahrzeugen, und den Belastungen auf die Fahrzeugkomponenten.

Der zunehmende Anteil an teil- und vollautonom fahrenden Fahrzeugen führt zur Erfordernis, dass die autonome Fahrzeugsteuerung auf Rückmeldung diverser Fahrzeugkomponenten angewiesen ist. Insbesondere die Überwachung des Zustands und ggf. erfolgter Fehl- oder Überlastung sicherheitsrelevanter Gussbauteile (z.B. im Fahrwerk) gewinnt zunehmend an Bedeutung.

Gemäß dem bisherigen Stand der Technik wird sowohl zum Schutz vor betriebsüblicher Belastung als auch vor starker bis besonders starker Überlastung des Gussbauteils eine konstruktive Überdimensionierung mit hohem Zusatzgewicht vorgenommen. Bei Fehl- oder Überlastung des Gussbauteils mit Beeinträchtigung bis zur Schädigung der Gussteilstruktur kommt es i.d.R. zum Versagen bzw. Ausfall des Gussteils. Eine Erkennung von Fehl- oder Überlastung kann i.d.R. nicht während der Betriebsphase gewährleistet werden, sondern wird zumeist erst im Nachgang festgestellt.

Im Rahmen von Forschungsprojekten wurde die Integration von Sensorik in Bauteile entwickelt, u.a. auch die direkt gießtechnische Integration in Gussteile während der gießtechnischen Herstellung. Die DE 10 2005 018 936 A1 beschreibt das direkte Eingießen von RFID-Transpondern und Sensoren in Metallgussteile während der gießtechnischen Herstellung des Metallgussteils. Es wird jedoch nicht beschrieben, wie der Sensor ausgeführt ist oder wie dessen Sensorprinzip funktioniert.

Die DE 10 2009 036 549 A1 beschreibt das direkte Eingießen piezokeramischer Aktoren und Sensoren. Diese arbeiten basierend auf dem piezoelektrischen Effekt und erzeugen bei Verformung skaliert zum Grad der Verformung eine veränderliche Spannung als Sensorsignal.

Diese im Stand der Technik vorgeschlagenen Lösungen sind jedoch kompliziert, wenig robust und sehr kostenintensiv.

Die DE 10 2005 016402 A1 betrifft ein Gussbauteil mit einem darin durch zumindest abschnittsweises Umspritzen integrierten Bauteil, wobei das Bauteil von einem Mantelmaterial umgeben ist, welches mit einem das Gussbauteil bildenden Material infiltriert ist.

In der US 2013/342186 A1 wird Vorrichtung zur Erfassung und Überwachung lokaler Parameter innerhalb einer festen Struktur beschrieben. Die Vorrichtung umfasst ein integriertes Erfassungsmodul, das auf einem einzigen Chip hergestellt ist und einen integrierten funktionellen Schaltungsteil mit mindestens einem integrierten Sensor und einer integrierten Antenne sowie elektromagnetische Mittel zum Senden/Empfangen von Signalen und zum Energieaustausch aufweist.

Die US 3 286 513 A betrifft eine Betonsonde, die die Möglichkeit bietet, sechs Komponenten von Betonverformungen gleichzeitig zu messen.

In RICO TIEDEMANN ET AL: "Sensor Integration in Castings Made of Aluminum - New Approaches for Direct Sensor Integration in Aluminum High Pressure Die Casting", KEY ENGINEERING MATERIALS, Bd. 742, 1. Juli 2017, Seiten 786-792, wird der Entwurf und die Herstellung eines auf ein Aluminiumblech gedruckten Dehnungsmessstreifens gezeigt.

In KESAVAN K ET AL: "Experimental studies on fiber optic sensors embedded in concrete", MEASUREMENT, INSTITUTE OF MEASUREMENT AND CONTROL. LONDON, GB, Bd. 43, Nr. 2, 1. Februar 2010 (2010-02-01 ), Seiten 157-163, werden Untersuchungen zur Entwicklung von Techniken zur Einbettung von faseroptischen Sensoren in Beton und die Leistungsbewertung der entwickelten Einbettungstechniken vorgestellt.

In MAHESHWAR GHIMIRE ET AL: "In situ monitoring of prestressed concrete using embedded fiber loop ringdown strain sensor", MEASUREMENT., Bd. 124, 1. August 2018 (2018-08-01 ), Seiten 224-232, wird über die In-situ-Überwachung von Spannbetonbalken in nahezu Echtzeit mit einem neuen FLRD-Dehnungssensor (Fiber Loop Ringdown) berichtet.

Ausgehend hiervon war es somit die Aufgabe der vorliegenden Erfindung eine Vorrichtung zur Erkennung mechanischer Belastungen und/oder Verformungen in einem Gussbauteil anzugeben, mit welcher auf einfache und kostengünstige Weise eine Erkennung mechanischer Belastungen und/oder Verformungen des Gussbauteils möglich ist.

Diese Aufgabe wird bezüglich einer Vorrichtung zur Erkennung mechanischer Belastungen und/oder Verformungen in einem Gussbauteil mit den Merkmalen des Patentanspruchs 1 gelöst. In Patentanspruch 9 werden Verwendungsmöglichkeiten der erfindungsgemäßen Vorrichtung angegeben. Die jeweilig abhängigen Patentansprüche stellen dabei vorteilhafte Weiterbildungen dar.

Erfindungsgemäß wird somit eine Vorrichtung zur Erkennung mechanischer Belastungen und/oder Verformungen in einem Gussbauteil angegeben, wobei die Vorrichtung ein Gussbauteil sowie ein Steuergerät zur Abgabe eines Signals umfasst, und wobei das Gussbauteil einen Gussgrundkörper und mindestens einen zumindest teilweise in den Gussgrundkörper eingebetteten Sensor zur Erkennung mechanischer Belastungen und/oder Verformungen des Gussbauteils umfasst. Das Steuergerät ist so konfiguriert, dass ein Signal abgegeben wird, wenn der mindestens eine Sensor eine bestimmte mechanische Belastung und/oder Verformung des Gussbauteils erkennt. Der mindestens eine Sensor ist in Form mindestens eines Kurzschlusselementes (oder Kontaktelementes) oder in Form mindestens eines Lichtleiters ausgebildet. Das Kurzschlusselement (bzw. der als Kurzschlusselement ausgebildete Sensor) umfasst mindestens eine elektrisch leitfähige Komponente und mindestens eine elektrisch isolierende Komponente, die die mindestens eine elektrisch leitfähige Komponente gegenüber dem Gussgrundkörper elektrisch isoliert. Erfindungsgemäß ist der mindestens eine Sensor so ausgebildet und angeordnet, dass ab der bestimmten mechanischen Belastung und/oder Verformung des Gussbauteils eine elektrische Verbindung oder eine Lichtleitung im mindestens einen Sensor unterbrochen oder hergestellt wird, wobei aus dem Unterbrechen oder Herstellen der elektrischen Verbindung oder der Lichtleitung das Signal resultiert, welches die Registrierung der bestimmten mechanischen Belastung bzw. Verformung des Gussbauteils durch den Sensor anzeigt.

Durch die gießtechnische Integration mindestens eines Sensors als elektronisches Funktionselement entsteht ein Gussbauteil mit höherer Funktionalität als bisher. Dieses Gussbauteil kann vorzugsweise auch als sogenanntes "smart casting" bezeichnet werden. "Smart castings" stellen die Basis zur Digitalisierung der Herstellungsprozesse von Gussbautteilen dar und bieten darüber hinaus neuartige Fähigkeiten zur Zustandsüberwachung von Gussbauteilen während Ihrer Nutzungsphase. Durch die messtechnische und frühzeitige Erkennung von kritischen Missbrauchslasten kann das erfindungsgemäße Gussbauteil besser überwacht und anwendungsgerecht dimensioniert werden. Somit eröffnen "smart castings" neue Leichtbaukonzepte und Vorteile zur Überwachung v.a. sicherheitsrelevanter Komponenten bei autonom fahrenden Fahrzeugen oder sich autonom bewegenden Transportmitteln, ebenso wie bei stationären Elementen wie z.B. Brücken.

Der mindestens eine in das Gussbauteil eingebettete bzw. eingegossene Sensor ermöglicht die Erkennung, die Messung und/oder die Beurteilung mechanischer Belastungen im Bauteil, wie z.B. Druck- und Zugkräfte, Verformungen oder Schwingungen. Aufgrund einer fertigungstechnischen Integration während eines Gießprozesses können die Sensoren direkt am Ort der Wirkung in das Bauteil eingebettet werden, um vor Überbelastung oder Schädigung des Bauteils zu warnen. Dies ist insbesondere für sicherheitsrelevante Gussbauteile ein entscheidender Vorteil. Der Sensor kann direkt an der geeigneten Position ins Gussbauteil eingebunden werden, an der kritische Belastungen zu erwarten und zu überwachen sind.

Basis der Erfindung ist hierbei, dass anstelle von konventionellen Sensoren (wie z.B. Dehnmesstreifen) einfache elektrische Leiter bzw. Verbindungen als "Kontaktelement" bzw. "Kurzschlusselement" eingegossen werden. Alternativ zu einem solchen Kurzschlusselement kann als Sensor auch ein Lichtleiter verwendet werden. Das Kurzschlusselement bzw. der Lichtleiter können gezielt in Bereichen des Gussbauteils platziert werden, in denen kritische Lasten und daraus resultierend kritische Verformungen zu erwarten und zu überwachen sind. Im Gegensatz zu außen aufgeklebten Dehnmessstreifen kann somit die Messung direkt über den Kraftfluss erfolgen. Der Sensor befindet sich geschützt - vor Verlust, vor äußerer mechanischer Beschädigung und vor Umwelteinflüssen - im Gussbauteil. Darüberhinaus kann - sofern eine klassische formschlüssige Anbindung des Sensors an die Gussmatrix nicht ausreicht - auch eine stoffschlüssige Verbindung in Betracht kommen. Zudem ist durch die Verwendung einfacher Kurzschlusselemente oder Lichtleiter zur Erzeugung des verformungsinduzierten Sensorsignals anstelle von z.B. piezoresistiv arbeitenden Sensoren keine thermoresistive Abhängigkeit des Sensors bei veränderlicher Betriebstemperatur gegeben.

Erfindungsgemäß kann der mindestens eine Sensor entweder in Form mindestens eines Kurzschlusselements oder in Form mindestens eines Lichtleiters ausgebildet bzw. ausgeführt sein. Der mindestens eine Sensor kann also mindestens ein Kurzschlusselement oder mindestens ein Lichtleiter sein.

Im Falle des Kurzschlusselements ist der mindestens eine Sensor (bzw. das mindestens eine Kurzschlusselement) so ausgebildet und angeordnet, dass ab einer bestimmten mechanischen Belastung und/oder Verformung des Gussbauteils eine elektrische Verbindung im mindestens einen Sensor (bzw. im mindestens einen Kurzschlusselement) unterbrochen oder hergestellt wird.

Aus dem Unterbrechen oder Herstellen der elektrischen Verbindung resultiert dann ein Signal, welches die Registrierung der bestimmten mechanischen Belastung bzw. Verformung des Gussbauteils durch den Sensor anzeigt. Zur Erzeugung eines speziellen Signals, z.B. eines optischen oder akustischen Signals, kann zusätzlich eine Steuereinheit verwendet werden, die zunächst das Signal des Sensors registriert und anschließend ein eigenes Signal erzeugt.

Im Falle des Lichtleiters (z.B. Lichtwellenleiters) ist der mindestens eine Sensor (bzw. der mindestens eine Lichtleiter) so ausgebildet und angeordnet, dass ab einer bestimmten mechanischen Belastung und/oder Verformung des Gussbauteils eine Lichtleitung (z.B. Lichtwellenleitung) im mindestens einen Sensor (bzw. im mindestens einen Lichtleiter) unterbrochen oder hergestellt wird. Aus dem Unterbrechen oder Herstellen der Lichtleitung resultiert dann ein Signal, welches die Registrierung der bestimmten mechanischen Belastung bzw. Verformung des Gussbauteils durch den Sensor anzeigt. Zur Erzeugung eines speziellen Signals, z.B. eines optischen oder akustischen Signals, kann zusätzlich eine Steuereinheit verwendet werden, die zunächst das Signal des Sensors registriert und anschließend ein eigenes Signal erzeugt.

Der Sensor in Form des Kurzschlusselementes kann vorzugsweise auf folgende Weise funktionieren: Werden die Bauteilbereiche mit eingegossenem Kurzschlusselement während der Nutzungsphase zu stark belastet und erfolgt somit eine Verformung, die eine definierte Spezifikation übersteigt, reißt bzw. bricht das Kurzschlusselement im Gussbauteil. Somit wird die elektrische Verbindung dieses Kurzschlusselementes unterbrochen, was durch ein Steuergerät erkannt werden kann, das ein entsprechendes Signal "Gussbauteil zu stark verformt → Gussbauteil verbogen" erzeugen kann. Das Steuergerät kann dabei entweder vom Gussbauteil umfasst sein oder nicht vom Gussbauteil umfasst sein.

Zudem ist es alternativ auch möglich, dass durch die Verformung des Gussbauteils ein mehrteiliges, z.B. zweiteiliges Kurzschlusselement, so zusammengefügt wird, dass diese Teile elektrisch miteinander verbunden werden und so eine elektrische Verbindung hergestellt wird, welche von einem Steuergerät erkannt wird, die ein entsprechendes Signal erzeugt.

Der Sensor in Form des Lichtleiters (z.B. Lichtwellenleiters) kann auf sehr ähnliche Weise funktionieren, wobei anstelle der elektrischen Verbindung eine Lichtleitung (z.B. Lichtwellenleitung) verwendet wird. Eine Verformung des Gussbauteils kann nun beispielsweise dazu führen, dass diese Lichtleitung aufgrund Biegung oder gar Bruch des Lichtleiters unterbrochen wird. Diese Unterbrechung kann von einem Steuergerät erkannt werden, welche ein Signal erzeugt, das die Verformung des Gussbauteils anzeigt.

Zudem ist es alternativ auch möglich, dass durch die Verformung des Gussbauteils ein mehrteiliger, z.B. zweiteiliger Lichtleiter, so zusammengefügt wird, dass die Teile miteinander verbunden werden und so eine Lichtleitung hergestellt wird, welche von einem Steuergerät erkannt wird, die ein entsprechendes Signal erzeugt.

Bei dem mindestens einen Lichtleiter kann es sich um mindestens einen Lichtwellenleiter handeln. Als der mindestens eine Lichtleiter (oder als der mindestens eine Lichtwellenleiter) kann beispielsweise eine Glasfaser oder eine Mehrzahl von Glasfasern verwendet werden.

Dadurch, dass das erfindungsgemäße Gussbauteil eine integrierte Zustandsüberwachung in Form eines Sensors zur Erkennung mechanischer Belastungen und/oder Verformungen umfasst, können die gemäß dem bisherigen Stand der Technik eingebrachten Überdimensionierungen von Gussbauteilen reduziert werden. Durch den in das Gussbauteil integrierten Sensor können Missbrauchslasten rechtzeitig erkannt werden, um Überlast oder Schädigung der Bauteilstruktur rechtzeitig zu erkennen und zu warnen. Intelligente Steuerungen könnten somit einen Schaden aktiv abwenden.

Die erfindungsgemäße Vorrichtung zeichnet sich u.a. dadurch aus, dass der mindestens eine Sensor in Form mindestens eines Lichtleiters oder in Form mindestens eines Kurzschlusselements (bzw. Kontaktelements) ausgebildet ist, wobei das Kurzschlusselement mindestens eine elektrisch leitfähige Komponente und mindestens eine elektrisch isolierende Komponente, die die mindestens eine elektrisch leitfähige Komponente gegenüber dem Gussgrundkörper elektrisch isoliert, umfasst. Ein solches Kurzschlusselement bzw. ein solcher Lichtleiter ermöglicht eine sehr einfache Erkennung mechanischer Belastungen und/oder Verformungen des Gussbauteils. So kann die elektrisch leitfähige Komponente des Kurzschlusselements beispielsweise nur in Form einer einfachen elektrischen Verbindung, z.B. in Form eines Drahtes, ausgeführt sein, die Teil eines elektrischen Stromkreises ist. Entsprechend kann der Lichtleiter beispielsweise nur durch eine einfache Glasfaser ausgeführt sein. Wird gemäß diesen Beispielen die elektrische Verbindung im Draht bzw. die Lichtleitung in der Glasfaser durch eine bestimmte mechanische Belastung und/oder Verformung des Gussbauteils zerstört (oder hergestellt), also z.B. in mindestens zwei nicht mehr miteinander verbundene Teile geteilt, wird der Stromkreis bzw. die Lichtleitung unterbrochen (oder kommt zustande), wodurch über den Sensor die mechanische Belastung bzw. die Verformung erkannt wird. Der Sensor selbst oder eine mit dem Sensor verbundende Steuereinheit kann dann die Unterbrechung (oder Herstellung) des Stromkreises und damit die mechanische Belastung bzw. Verformung durch Abgabe eines Signals anzeigen. Durch die Verwendung des Kurzschlusselements bzw. des Lichtleiters wird somit eine sehr einfache Erkennung mechanischer Belastungen und/oder Verformungen des Gussbauteils ermöglicht. Zudem kann das/der im erfindungsgemäßen Gussbauteil eingesetzte Kurzschlusselement/Lichtleiter sehr einfach und kostengünstig ausgeführt sein, beispielsweise durch Verwendung eines einfachen Drahtes mit einer elektrischen Isolierung bzw. durch Verwendung einer einfachen Glasfaser. Ein solches/solcher Kurzschlusselement/Lichtleiter ist im Vergleich zu anderen Sensoren nicht nur sehr preiswert sondern auch wenig anfällig für Fehler. Zudem ist beim Eingießen eines solchen Kurzschlusselements/Lichtleiters in den Gussgrundkörper auch kein thermischer Schutz notwendig, der normalerweise zum Schutz vor Beschädigung oder Zerstörung sensibler Sensorik vor der hohen Schmelztemperatur angewandt wird.

Die erfindungsgemäße Vorrichtung bietet somit eine technisch einfache zugleich kostengünstige Lösung für die Erkennung mechanischer Belastungen und/oder Verformungen des Gussbauteils. Hierbei ist auch von Bedeutung, dass durch die Verwendung eines Kurzschlusselements bzw. Lichtleiters als Sensor die Sensorfunktionalität reduziert werden kann, indem beispielsweise kein skalierter Messwert bei veränderlicher Verformung erzeugt wird, sondern lediglich ein digitales "ok" bzw. "nicht ok" Signal erzeugt wird sobald eine definierte Maximalverformung erreicht bzw. überschritten wird.

Für den Fall, dass der Sensor in Form eines Kurzschlusselements ausgebildet ist, ist es erforderlich, dass das Kurzschlusselement mindestens eine elektrisch leitfähige Komponente und mindestens eine elektrisch isolierende Komponente, die die mindestens eine elektrisch leitfähige Komponente gegenüber dem Gussgrundkörper elektrisch isoliert, umfasst. Durch das Vorhandensein der mindestens einen elektrisch leitfähigen Komponente wird die Erkennung mechanischer Belastungen und/oder Verformungen des Gussbauteils durch Unterbrechen oder Schließen einer elektrischen Verbindung, z.B. eines Stromkreises, welcher die elektrisch leitfähige Komponente enthält, ermöglicht. Durch das Vorhandensein der mindestens einen elektrisch isolierenden Komponente wird eine Isolierung der elektrisch leitfähigen Komponente gegenüber dem Gussgrundkörper erreicht, wodurch eine fehlerfreie Ausbildung der zu unterbrechenden oder zu schließenden elektrischen Verbindung bzw. des zu unterbrechenden oder zu schließenden Stromkreises ermöglicht wird.

Erfindungsgemäß ist der mindestens eine Sensor (bzw. das Kurzschlusselement oder der Lichtleiter) so ausgebildet und (innerhalb des Gussbauteils bzw. des Gussgrundkörpers) angeordnet, dass ab einer bestimmten mechanischen Belastung und/oder Verformung des Gussbauteils eine elektrische Verbindung oder eine Lichtleitung im mindestens einen Sensor (bzw. im Kurzschlusselement oder im Lichtleiter) unterbrochen oder hergestellt wird.

Der Sensor (bzw. das Kurzschlusselement oder der Lichtleiter) sollte dabei so innerhalb des Gussbauteils bzw. des Gussgrundkörpers angeordnet bzw. positioniert sein, dass die elektrische Verbindung bzw. die Lichtleitung durch eine entsprechend große auf das Gussbauteil wirkende mechanische Belastung unterbrochen oder hergestellt werden kann. Die genaue Anordnung des Sensors (bzw. des Kurzschlusselements oder des Lichtleiters) ist somit abhängig von der Stelle, an welcher die erwartete mechanische Belastung auf das Gussbauteil wirkt, und auch von der Richtung, aus welcher die erwartete mechanische Belastung auf das Gussbauteil wirkt. Zudem ist die Ausführung bzw. Ausbildung des Sensors (bzw. des Kurzschlusselements oder des Lichtleiters), also z.B. die Art, die Form, die Stabilität, die Materialstärke, abhängig von der zu erwartenden mechanischen Belastung bzw. auch von der Stabilität des Gussbauteils selbst sowie vom Grad der mechanischen Belastung bzw. Verformung, der durch den Sensor erkannt bzw. detektiert werden soll.

Beispielsweise kann es sich im Falle der Ausgestaltung des Sensors als Kurzschlusselement bei der elektrisch leitfähigen Komponente um einen Draht handeln, der genau dann reißt, wenn die bestimmte mechanische Belastung und/oder Verformung des Gussbauteils an einer gewissen Stelle des Gussbauteils erreicht ist. Hierfür kann eine elektrische leitfähige Komponente, z.B. ein Draht, in einer geeigneten Stabilität bzw. Materialstärke gewählt werden, der an einer passenden Stelle im Gussbauteil positioniert wird, so dass der Draht bei der gewünschten mechanischen Belastung an einer bestimmten Stelle des Gussbauteils auch tatsächlich reißt.

Ist das Kurzschlusselement so ausgeführt sein, dass ab einer bestimmten mechanischen Belastung und/oder Verformung des Gussbauteils die elektrische Verbindung im Kurzschlusselement unterbrochen wird, kann beispielsweise ein Signal der Verformungserkennung durch Unterbrechung des elektrischen Leiters bei zu starker Verformung / Dehnung bzw. bei Bruch des Gussbauteils erzeugt werden und somit ein Warnsignal sowohl bei Verformung als auch z.B. mangelhafter Kontaktierung erzeugt werden (= Fail-Safe Funktionssicherung). Die Variante der Unterbrechung der elektrischen Verbindung im Kurzschlusselement bei mechanischer Belastung und/oder Verformung ist deshalb besonders vorteilhaft, da vermieden werden kann, dass die Anzeige einer kritischen Belastung bzw. Verformung dadurch unterbleibt, dass eine mangelhafte Kontaktierung vorliegt. Vielmehr wird hier bei einer solchen mangelhaften Kontaktierung, d.h. bei einem Defekt der elektrischen Leitung, auch ein entsprechendes Signal erzeugt. Eine mangelhafte Kontaktierung bzw. ein Defekt der elektrischen Leitung kann beispielsweise dadurch entstehen, dass die elektrisch isolierende Komponente, z.B. durch eine noch unkritische Verformung des Gussbauteils oder durch Korrosion, beschädigt wird und somit die zuvor isolierte elektrisch leitfähige Komponente nun elektrischen Kontakt zum Gussgrundkörper oder einer weiteren parallel verlaufenden elektrisch leitfähigen Komponente herstellen kann.

Der mindestens eine Sensor kann teilweise oder vollständig in den Gussgrundkörper eingebettet sein.

Gemäß einer weiteren bevorzugten Ausführungsform der erfindungsgemäßen Vorrichtung ist die mindestens eine elektrisch leitfähige Komponente ausgewählt aus der Gruppe bestehend aus elektrisch leitfähigen Drähten, Leiterbahnen, Geweben, Halbleitern, Schichtleitern, elektrisch leitfähigen Pasten, elektrisch leitfähigen Beschichtungen, Hybridmaterialien mit Anteilen elektrisch leitfähiger Partikel sowie Mischungen und Kombinationen hiervon.

Besonders bevorzugt ist, dass die mindestens eine elektrisch leitfähige Komponente als Gewebestruktur oder als Hybridmaterial mit Anteilen elektrisch leitfähiger Partikel ausgebildet ist, wobei die Gewebestruktur bzw. das Hybridmaterial ab einer bestimmten mechanischen Verformung des Gussbauteils so verformt wird, dass sich der elektrische Widerstand der Gewebestruktur bzw. des Hybridmaterials ändert.

Eine weitere bevorzugte Ausführungsform der erfindungsgemäßen Vorrichtung ist dadurch gekennzeichnet, dass die mindestens eine elektrisch leitfähige Komponente ein Material enthält oder hieraus besteht, welches ausgewählt ist aus der Gruppe bestehend aus Kupfer, Aluminium, Stahl, Eisen, Silber, Gold, Zinn, Zink sowie Mischungen und Legierungen hiervon.

Weiterhin ist es bevorzugt, dass die mindestens eine elektrisch isolierende Komponente ausgewählt ist aus der Gruppe bestehend aus elektrisch isolierenden Beschichtungen, elektrisch isolierenden Ummantelungen, elektrische isolierenden Hohlelementen, vorzugsweise elektrisch isolierenden Rohren, sowie Mischungen und Kombinationen hiervon.

Eine weitere bevorzugte Ausführungsform zeichnet sich dadurch aus, dass die mindestens eine elektrisch isolierende Komponente ein Material enthält oder hieraus besteht, welches ausgewählt ist aus der Gruppe bestehend aus Silikon, Siloxan, Polyimid, Polyamidimid, Polyetheretherketon, Polyetherimid, Polyurethan, Liquid Crystal Polymer, Keramik, Halbleitern, elektrisch isolierenden Oxiden und Mischungen hiervon.

Es ist besonders bevorzugt, dass das mindestens eine Kurzschlusselement
- mindestens einen elektrisch leitfähigen Draht als elektrisch leitfähige Komponente umfasst, welcher mit einer elektrisch isolierenden Ummantelung als elektrisch isolierende Komponente ummantelt ist, und/oder
- ein Substrat, vorzugsweise eine Platine, umfasst, auf welchem mindestens eine mit der elektrisch isolierenden Komponente gegenüber dem Gussgrundkörper isolierte Leiterbahn als elektrisch leitfähige Komponente oder mindestens ein mit der elektrisch isolierenden Komponente gegenüber dem Gussgrundkörper isolierter Schichtleiter als elektrisch leitfähige Komponente aufgebracht ist, und/oder
- mindestens ein elektrisch isolierendes Hohlelement, vorzugweise ein elektrisch isolierendes Rohr, als elektrisch isolierende Komponente umfasst, in welchem die elektrische leitfähige Komponente verläuft, wobei die elektrisch leitfähige Komponente vorzugsweise ein innerhalb des elektrische isolierenden Hohlelements angeordneter elektrischer Leiter oder eine auf der Innenseite des elektrisch isolierenden Hohlelements aufgebrachte elektrisch leitfähige Paste oder elektrisch leitfähige Beschichtung ist.

Das Kurschlusselement kann im einfachsten Fall z.B. als elektrisch isolierter Draht ausgeführt sein, der im Überwachungsbereich des Gussteils eingegossen ist und somit durch das Gussbauteil geführt wird. Eine alternative Ausführungsform wäre z.B. eine Platinenbauweise, bei der auf einer Platine bzw. einem Substrat elektrische Leitungen im Dich- oder Dünnschichtverfahren als Schichtleiter aufgebracht sind und elektrisch gegenüber dem Gussbauteil isoliert werden. Eine weitere alternative Ausführungsform wäre ein Hohlelement (z.B. ein Rohr), in dem ein elektrischer Leiter verläuft, und das bei mechanischer Verformung brechen bzw. reißen kann. Dieses Hohlelement kann vorzugsweise aus Keramik oder vergleichsweise spröden Werkstoffen bestehen. Der Leiter muss hierbei kein massiver Draht oder ähnliches sein, sondern kann z.B. als Paste oder Beschichtung auf der Innenseite des Hohlleiters aufgebracht sein. Eine weitere alternative Ausführungsform wäre eine Ummantelung eines elektrischen Leiters mit einem Gewebe.

Vorzugsweise ist der mindestens eine Sensor in einem Bereich des Gussbauteils angeordnet, der bei einer Verwendung des Gussbauteils einer mechanischen Belastung ausgesetzt ist, die zu einer geometrischen Verformung des Gussbauteils führt oder führen kann.

Die Position des Sensors (bzw. des Elements zur Verformungserkennung) im Gussbauteil ist vorzugsweise so zu wählen, dass er außerhalb der "neutralen Faser" bzw. innerhalb der Lastpfadlinie liegt.

Gemäß einer weiteren bevorzugten Ausführungsform der erfindungsgemäßen Vorrichtung enthält der Gussgrundkörper ein Material oder besteht hieraus, welches ausgewählt ist aus der Gruppe bestehend aus
- Metallen, vorzugsweise Aluminium, Magnesium, Stahl, Gusseisen, Kupfer, Zink, Zinn,
- Kunststoffen, vorzugsweise Thermoplasten, Duroplasten, Elastomeren, besonders bevorzugt PA, PC, PP, ABS, PET, PEEK, PI, PAI, Epoxidharz,
- Faserverbundkunststoffen, vorzugsweise Glasfaserverbundkunststoff oder Kohlefaserverbundkunststoff, deren Matrixmaterial bevorzugt auf Epoxidharz basiert und gießtechnisch in die Faserzwischenräume infiltriert ist,
- Keramiken,
- zementgebundenen Werkstoffen, vorzugsweise Beton,
- sowie Mischungen und Kombinationen hiervon.

Eine weitere bevorzugte Ausführungsform ist dadurch gekennzeichnet, dass das Gussbauteil ein Kontaktierungselement zur Kontaktierung des Kurzschlusselements umfasst, wobei das Kontaktierungselement vorzugsweise ausgewählt ist aus der Gruppe bestehend aus Kabeln, Steckverbindern, Elementen zur kabellosen Verbindung, z.B. mittels induktiver Kopplung oder Funk sowie Kombinationen hiervon, und wobei das Kontaktierungselement vorzugsweise kraft- oder formschlüssig, klebetechnisch oder stoffschlüssig, z.B. per Löten oder Schweißen, mit dem Kurzschlusselement verbunden ist.

Weiterhin ist es bevorzugt, dass der mindestens eine Sensor zumindest teilweise formschlüssig, stoffschlüssig oder kraftschlüssig mit dem Gussgrundkörper verbunden ist.

Eine weitere bevorzugte Ausführungsform der erfindungsgemäßen Vorrichtung zeichnet sich dadurch aus, dass das Gussbauteil mindestens zwei in den Gussgrundkörper eingebettete Sensoren zur Erkennung mechanischer Belastungen und/oder Verformungen des Gussbauteils umfasst, wobei die mindestens zwei Sensoren mindestens einen erster Sensor zur Erkennung einer ersten Belastungsgrenze und mindestens einen zweiten Sensor zur Erkennung einer sich von der ersten Belastungsgrenze unterscheidenden zweiten Belastungsgrenze umfassen. Unter Belastungsgrenze ist hierbei ein bestimmter Grad der mechanischen Belastung bzw. Verformung des Gussbauteils zu verstehen, welcher vom jeweiligen Sensor registriert wird. Somit können beispielsweise ein erster Sensor, der eine geringe mechanische Belastung bzw. Verformung registriert, sowie ein zweiter Sensor, der eine höhere mechanische Belastung bzw. Verformung registriert, vorhanden sein.

Eine weitere bevorzugte Ausführungsform ist dadurch gekennzeichnet, dass das Gussbauteil mindestens drei in den Gussgrundkörper eingebettete Sensoren zur Erkennung mechanischer Belastungen und/oder Verformungen des Gussbauteils umfasst, wobei die mindestens drei Sensoren mindestens einen ersten Sensor zur Erkennung einer ersten Belastungsgrenze, mindestens einen zweiten Sensor zur Erkennung einer über der ersten Belastungsgrenze liegenden zweiten Belastungsgrenze und mindestens einen dritten Sensor zur Erkennung einer über der ersten und der zweiten Belastungsgrenze liegenden dritten Belastungsgrenze umfassen, so dass durch die mindestens drei Sensoren eine skalierte Anzeige der mechanischen Belastung des Gussbauteils ermöglicht wird. Gemäß dieser Ausführungsform ist nun noch mindestens ein dritter Sensor zur Erkennung einer dritten Belastungsgrenze vorhanden. Auf diese Weise kann ein skaliertes Signal bzw. eine Art Ampelsystem erhalten werden, wobei der erste Sensor kritische Belastungen registriert und anzeigt, der zweite Sensor Belastungen durch weitere Verformungen registriert und anzeigt, bei welchen ein unmittelbarer Bruch des Gussbauteils bevorsteht, und der dritte Sensor einen Bruch des Gussbauteils registriert und anzeigt. Es kann somit trotz der Verwendung sehr preisgünstiger und einfacher Sensoren eine skalierte Belastungsanzeige erhalten werden.

Vorzugsweise umfasst das erfindungsgemäße Gussbauteil ein Steuergerät zur Abgabe eines Signals, vorzugsweise eines Warn- und/oder Steuersignals, wobei das Steuergerät so konfiguriert ist, dass ein Signal abgegeben wird, wenn der mindestens eine Sensor eine bestimmte mechanische Belastung und/oder Verformung des Gussbauteils erkennt.

Zusätzlich wird ein Verfahren zur Herstellung eines erfindungsgemäßen Gussbauteils beschrieben, bei welchem der Gussgrundkörper mittels eines Gießverfahrens hergestellt und dabei der mindestens eine Sensor zumindest teilweise in den Gussgrundkörper eingegossen wird.

Die vorliegende Erfindung betrifft eine Vorrichtung zur Überwachung mechanischer Belastungen und/oder Verformungen in einem Gussbauteil, umfassend ein erfindungsgemäßes Gussbauteil sowie ein Steuergerät zur Abgabe eines Signals, vorzugsweise eines Warn- und/oder Steuersignals, wobei das Steuergerät so konfiguriert ist, dass ein Signal abgegeben wird, wenn der mindestens eine Sensor eine bestimmte mechanische Belastung und/oder Verformung des Gussbauteils erkennt. Hierbei ist es möglich, dass das erfindungsgemäße Gussbauteil das Steuergerät umfasst oder dass das Steuergerät nicht vom erfindungsgemäßen Gussbauteil umfasst ist. Vorzugsweise ist das Steuergerät nicht mit in den Gussgrundkörper eingegossen. Alternativ kann das Steuergerät aber auch mit in den Gussgrundkörper eingegossen sein.

Die erfindungsgemäße Vorrichtung ist sehr robust und technisch einfach. Sie ist insbesondere zur Absicherung und Überwachung von Fehl-, Über- und Missbrauchslasten in sicherheitsrelevanten Gussteilen geeignet. Durch die Kombination von Sensor und Steuergerät kann eine einfache Erkennung und Anzeige bzw. Signalisierung einer zu starken mechanischen Belastung und/oder Verformung erreicht werden.

Beschrieben wird zudem auch ein Fahrzeug, eine Maschine oder ein Bauwerk, umfassend ein erfindungsgemäßes Gussbauteil oder eine erfindungsgemäße Vorrichtung zur Überwachung mechanischer Belastungen und/oder Verformungen, wobei das Fahrzeug vorzugsweise ausgewählt ist aus der Gruppe bestehend aus Kraftfahrzeugen, z.B. Personenkraftwagen, Lastkraftwagen, Motorrädern, Booten, Landmaschinen, Fahrzeugen der Luft- und Raumfahrt, Schienenfahrzeugen, und/oder die Maschine vorzugsweise ausgewählt ist aus der Gruppe bestehend aus Kränen, Bearbeitungsmaschinen, Windrädern, und/oder das Bauwerk vorzugsweise eine Brücke ist.

Ferner betrifft die vorliegende Erfindung auch die Verwendung einer erfindungsgemäßen Vorrichtung zur Überwachung von Belastungszuständen und/oder zur Erkennung von Überlast bzw. Missbrauchslast in Fahrzeugen, vorzugsweise Kraftfahrzeugen, z.B. Personenkraftwagen, Lastkraftwagen, Motorrädern, Booten, Landmaschinen, Fahrzeugen der Luft- und Raumfahrt, Schienenfahrzeugen, in Maschinen, z.B. Kränen, Bearbeitungsmaschinen, Windrädern, in Bauwerken, z.B. Brücken. Bei Fahrzeugen kann insbesondere eine Überwachung von Belastungszuständen und/oder eine Erkennung von Überlast bzw. Missbrauchslast in gießtechnisch hergestellten Komponenten des Fahrwerks, des Chassis und/oder der Fahrzeugstruktur des Fahrzeugs erfolgen.

Bei dieser Verwendung ist es dabei bevorzugt, dass ab einer bestimmten mechanischen Belastung und/oder Verformung des Gussbauteils eine elektrische Verbindung oder eine Lichtleitung im Sensor unterbrochen oder hergestellt wird und dadurch ein Signal, vorzugsweise ein Warn- und/oder Steuersignal, ausgelöst wird.

Weiterhin ist bei den genannten Verwendungen bevorzugt, dass ab einer bestimmten mechanischen Belastung und/oder Verformung des Gussbauteils eine elektrische Verbindung im Kurzschlusselement unterbrochen oder hergestellt wird und dadurch ein Signal, vorzugsweise ein Warn- und/oder Steuersignal, ausgelöst wird, wobei vorzugsweise die elektrische Verbindung im Kurzschlusselement dadurch unterbrochen wird, dass ab einer bestimmten mechanischen Belastung und/oder Verformung des Gussbauteils die elektrisch leitfähige Komponente so in mindestens zwei Teile geteilt wird, dass die mindestens zwei Teile nicht mehr elektrisch miteinander verbunden sind.

Es ist bei der erfindungsgemäßen Verwendung besonders bevorzugt, dass das Gussbauteil in einem Fahrzeug, vorzugsweise in einem autonom fahrenden Fahrzeug, angeordnet ist und das Signal ein Warn- und/oder Steuersignal zur Vermeidung von Beschädigung, Fehlverhalten, Versagen und/oder Unfällen bei der Nutzung des Fahrzeugs ist. Es kann somit ein Schutz vor Gefahren durch verformte, beschädigte oder gebrochene Gussbauteile erreicht werden. Dies ist insbesondere bei Beeinträchtigung sicherheitsrelevanter Gussbauteile von Bedeutung.

Ferner wird auch ein Verfahren zur Überwachung mechanischer Belastungen und/oder Verformungen in einem erfindungsgemäßen Gussbauteil beschrieben, bei welchem ab einer bestimmten mechanischen Belastung und/oder Verformung des Gussbauteils eine elektrische Verbindung im Kurzschlusselement oder eine Lichtleitung im Lichtleiter unterbrochen oder hergestellt wird und dadurch ein Signal, vorzugsweise ein Warn- und/oder Steuersignal, ausgelöst wird, wobei vorzugsweise die elektrische Verbindung im Kurzschlusselement dadurch unterbrochen wird, dass ab einer bestimmten mechanischen Belastung und/oder Verformung des Gussbauteils die elektrisch leitfähige Komponente so in mindestens zwei Teile geteilt wird, so dass die mindestens zwei Teile nicht mehr elektrisch miteinander verbunden sind. Das Signal kann beispielsweise von einem Steuergerät oder auch vom Sensor selbst ausgelöst werden.

Als Resultat des erzeugten Warnsignals aufgrund zu starker Verformung oder Bruch des Kurzschlusselements kann ein Steuersignal beispielsweise dazu führen, dass ein Fahrzeug in einen definierten Notlaufmodus versetzt wird, um weiteren Schaden abzuwenden.

Anhand der nachfolgenden Beispiele und Figuren soll die vorliegende Erfindung näher erläutert werden, ohne diese auf die hier gezeigten spezifischen Ausführungsformen und Parameter zu beschränken.

In den folgenden Ausführungsbeispielen ist der Sensor bzw. sind die Sensoren beispielhaft immer in Form eines Kurzschlusselements bzw. mehrerer Kurzschlusselemente ausgebildet. Alternativ kann/können in den folgenden Ausführungsbeispielen jedoch auf entsprechende Weise statt dem/den Kurzschlusselement/Kurzschlusselementen auch ein Lichtleiter bzw. mehrere Lichtleiter verwendet werden.

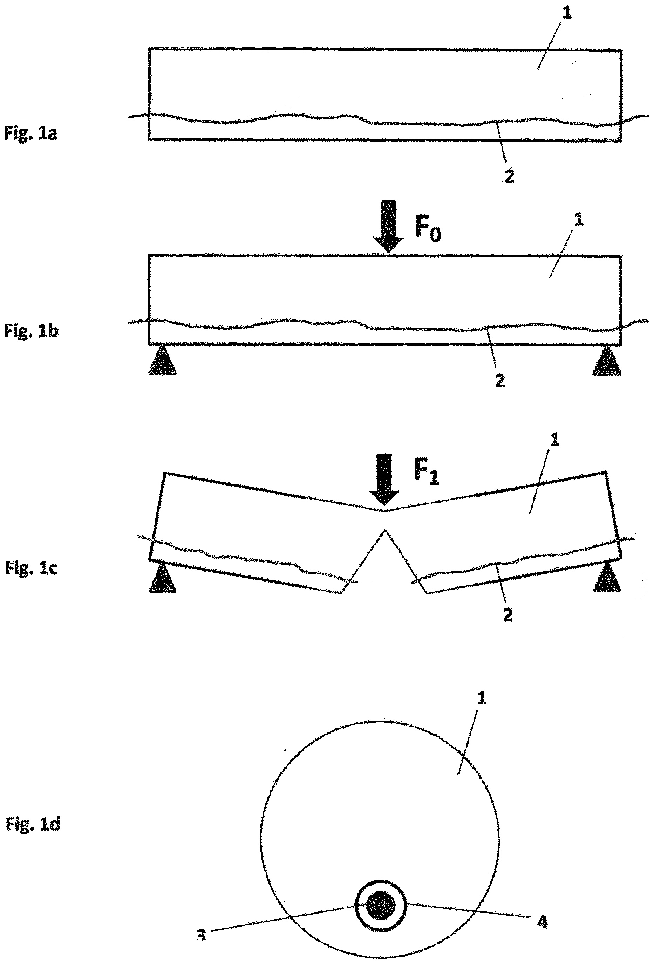

Fig. 1a zeigt eine vereinfachte schematische Darstellung einer beispielhaften Ausführungsform des erfindungsgemäßen Gussbauteils. Dieses umfasst einen Gussgrundkörper 1 und einen zumindest teilweise in den Gussgrundkörper 1 eingebetteten Sensor 2 zur Erkennung mechanischer Belastungen und/oder Verformungen des Gussbauteils. Der Sensor 2 ist in Form eines Kurzschlusselementes ausgebildet und lediglich vereinfacht dargestellt. Das Kurzschlusselement, umfasst mindestens eine elektrisch leitfähige Komponente und mindestens eine elektrisch isolierende Komponente, die die mindestens eine elektrisch leitfähige Komponente gegenüber dem Gussgrundkörper elektrisch isoliert. Im in Figur 1a dargestellten Bespiel umfasst das Kurzschlusselement einen elektrisch leitfähigen Draht als elektrisch leitfähige Komponente, welcher mit einer elektrisch isolierenden Ummantelung als elektrisch isolierende Komponente ummantelt ist. Das Kurzschlusselement ist so ausgebildet, dass ab einer bestimmten mechanischen Belastung und/oder Verformung des Gussbauteils eine elektrische Verbindung im Kurzschlusselement unterbrochen wird. Das Gussbauteil kann mit einem Steuergerät zur Abgabe eines Signals, vorzugsweise eines Warn- und/oder Steuersignals, kombiniert werden, wobei das Steuergerät so konfiguriert ist, dass ein Signal abgegeben wird, wenn der mindestens eine Sensor eine bestimmte mechanische Belastung und/oder Verformung des Gussbauteils erkennt.

In den Fig. 1b und 1c wird die Funktionsweise des in Fig. 1a dargestellten Gussbauteils veranschaulicht. Hierzu wird eine bei der Verwendung des Gussbauteils auf das Gussbauteil wirkende mechanische Belastung simuliert, in dem das Gussbauteil auf zwei Elementen teilweise fixiert wird und anschließend eine Kraft auf das Gussbauteil ausgeübt wird. Bei geringer Kraft Fo, wie in Fig. 1b dargestellt, tritt noch keine kritische Verformung auf. Das Kurzschlusselement bzw. dessen elektrisch leitfähige Komponente bleibt somit unbeschädigt, weshalb die elektrische Verbindung die durch das Kurzschlusselement läuft intakt bleibt. Wird nun, wie in Fig. 1c dargestellt, eine größere Kraft F₁ (F₁ > Fo) auf das Gussbauteil ausgeübt, die mindestens einer bestimmten mechanischen Belastung entspricht, verformt sich das Gussbauteil deutliche stärker, wobei es hierbei auch teilweise brechen kann, so wie dies in Fig. 1c dargestellt ist. Es muss jedoch nicht zwingend zu einem Bruch des Gussbauteils kommen. Durch die starke Verformung des Gussbauteils reißt auch das Kurzschlusselement bzw. dessen elektrisch leitfähige Komponente. Die elektrische Leitung im Kurzschlusselement wird dabei unterbrochen. Durch diese Unterbrechung der elektrischen Leitung registriert der Sensor das Eintreten einer kritischen Belastung bzw. Verformung des Gussbauteils. Durch die Unterbrechung der elektrischen Leitung kann vom Sensor bzw. der Steuereinheit ein Warn- und/oder Steuersignal ausgelöst werden.

In Fig. 1d ist eine Detailansicht des Gussbauteils aus Fig. 1a in einer Querschnittsansicht dargestellt. Zu erkennen sind neben dem Gussgrundkörper 1 auch die als elektrisch leitfähiger Draht 3 ausgebildete elektrisch leitfähige Komponente sowie die als elektrisch isolierende Ummantelung 4 ausgebildete elektrisch isolierende Komponente, die jeweils Teil des Sensors sind.

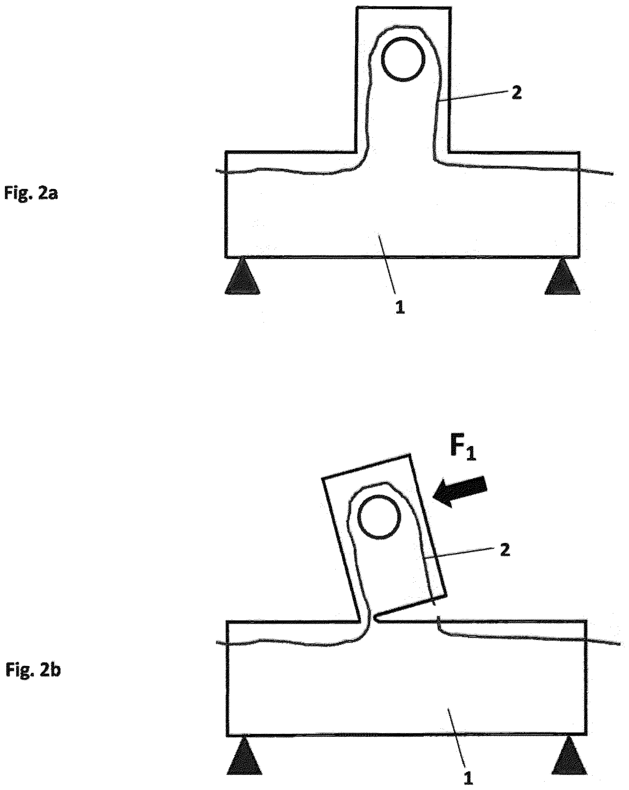

In den Fig. 2a und 2b ist eine vereinfachte schematische Darstellung einer weiteren beispielhaften Ausführungsform des erfindungsgemäßen Gussbauteils dargestellt. Diese unterscheidet sich letztlich lediglich dadurch von der in den Fig. 1a bis 1c dargestellten Variante, dass das Gussbauteil eine andere Form aufweist und der Sensor 2 bzw. das Kurzschlusselement an einer anderen Stelle des Gussbauteils angeordnet ist. So weist das Gussbauteil ein spezielles abstehendes Element auf, wobei während der Benutzung des Gussbauteils eine besondere mechanische Belastung von der Seite auf dieses abstehende Element wirken kann. Wird diese Belastung, welche in Form der Kraft F₁ dargestellt wird, zu groß, bricht das hervorstehende Element ab. Der Sensor 2 mit dem Kurzschlusselement ist nun in einem solchen Bereich des Gussbauteils bzw. des Gussgrundkörpers 1 angeordnet, dass ein aus der erwähnten mechanischen Belastung resultierendes Abbrechen des hervorstehenden Elements zu einem Zerrreißen bzw. Zerstören des Kurzschlusselements führt, wodurch die elektrische Leitung im Kurzschlusselement unterbrochen wird. Durch diese Unterbrechung der elektrischen Leitung registriert der Sensor das Eintreten einer kritischen Belastung bzw. Verformung des Gussbauteils. Durch die Unterbrechung der elektrischen Leitung kann vom Sensor bzw. der Steuereinheit ein Warn- und/oder Steuersignal ausgelöst werden.

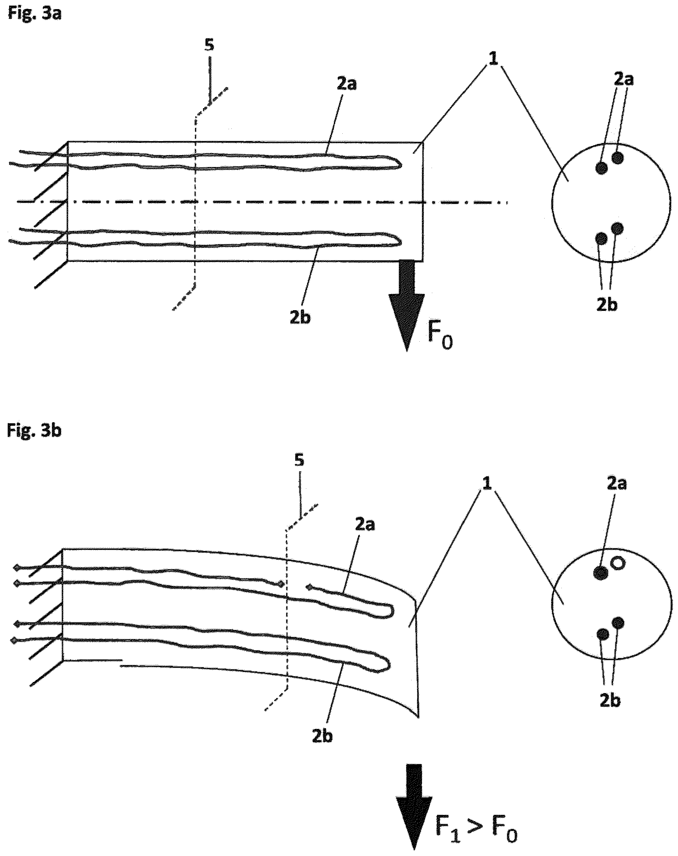

In den Fig. 3a bis 3c ist eine vereinfachte schematische Darstellung einer weiteren beispielhaften Ausführungsform des erfindungsgemäßen Gussbauteils dargestellt. Hierbei ist jeweils in der rechten Abbildung eine Schnittanschicht an der in der jeweils linken Abbildung markierten Schnittebene 5 dargestellt. Das in den Fig. 3a bis 3c dargestellte Gussbauteil unterscheidet sich von dem in Fig. 1a dargestellten Gussbauteil im Wesentlichen dadurch, dass es zwei Sensoren 2a, 2b zur Erkennung mechanischer Belastungen und/oder Verformungen des Gussbauteils umfasst. Jeder der beiden Sensoren 2a, 2b ist in Form eines Kurzschlusselementes ausgebildet und umfasst einen elektrisch leitfähigen Draht als elektrisch leitfähige Komponente, welcher mit einer elektrisch isolierenden Ummantelung als elektrisch isolierende Komponente ummantelt ist. Der erste Sensor 2a dient zur Erkennung einer ersten Belastungsgrenze, während der zweite Sensor 2b zur Erkennung einer sich von der ersten Belastungsgrenze unterscheidenden zweiten Belastungsgrenze dient. Die zweite Belastungsgrenze liegt hierbei höher als die erste Belastungsgrenze. Mit anderen Worten reißt der elektrisch leitfähige Draht des ersten Sensors bereits bei einer vergleichsweise niedrigen mechanischen Belastung bzw. Verformung und zeigt somit bereits eine geringe mechanische Belastung bzw. Verformung an, während der elektrisch leitfähige Draht des zweiten Sensors erst bei einer vergleichsweise höheren mechanischen Belastung bzw. Verformung reißt und somit eine hohe mechanische Belastung bzw. Verformung anzeigt.

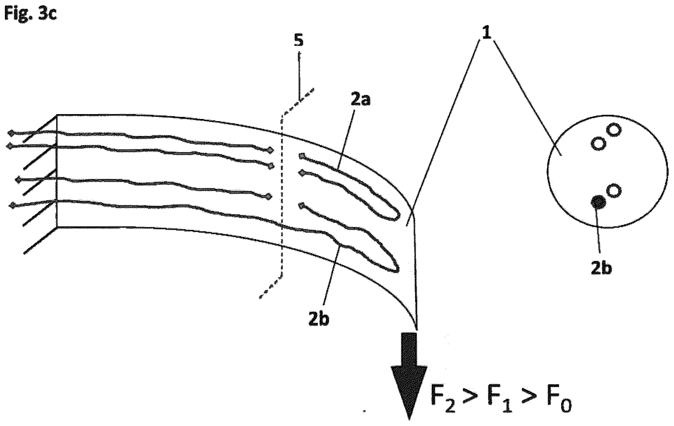

Das Funktionsprinzip wird nun in der Zusammenschau der Figuren 3a bis 3c dargestellt. In Figur 3a wirkt keinerlei mechanische Belastung auf das Gussbauteil (Kraft Fo). Entsprechend sind die elektrisch leitfähigen Drähte der beiden Sensoren 2a und 2b beide noch intakt. In Figur 3b wirkt nun eine mechanische Belastung in Form der Kraft F₁ auf das Gussbauteil, wodurch sich das Gussbauteil verformt. In Folge der Verformung reißt der elektrisch leitfähige Draht des ersten Sensors 2a, wohingegen der elektrisch leitfähige Draht des zweiten Sensors 2b noch intakt bleibt. In Figur 3c wirkt schließlich eine Kraft F₂ auf das Gussbauteil, welche größer als die Kraft F₁ ist, wodurch sich das Gussbauteil noch stärker verformt. In Folge der noch stärkeren Verformung reißt nun nicht nur der elektrisch leitfähige Draht des ersten Sensors 2a sondern auch der elektrisch leitfähige Draht des zweiten Sensors 2b.

Durch die Verwendung von zwei Sensoren 2a und 2b kann somit eine Skalierung erreicht werden. Schlägt lediglich der erste Sensor 2a an, liegt lediglich eine geringe mechanische Belastung bzw. Verformung des Gussbauteils vor. Schlagen hingegen beide Sensoren 2a und 2b an, liegt eine hohe mechanische Belastung bzw. Verformung des Gussbauteils vor, gegebenenfalls sogar ein Bruch.

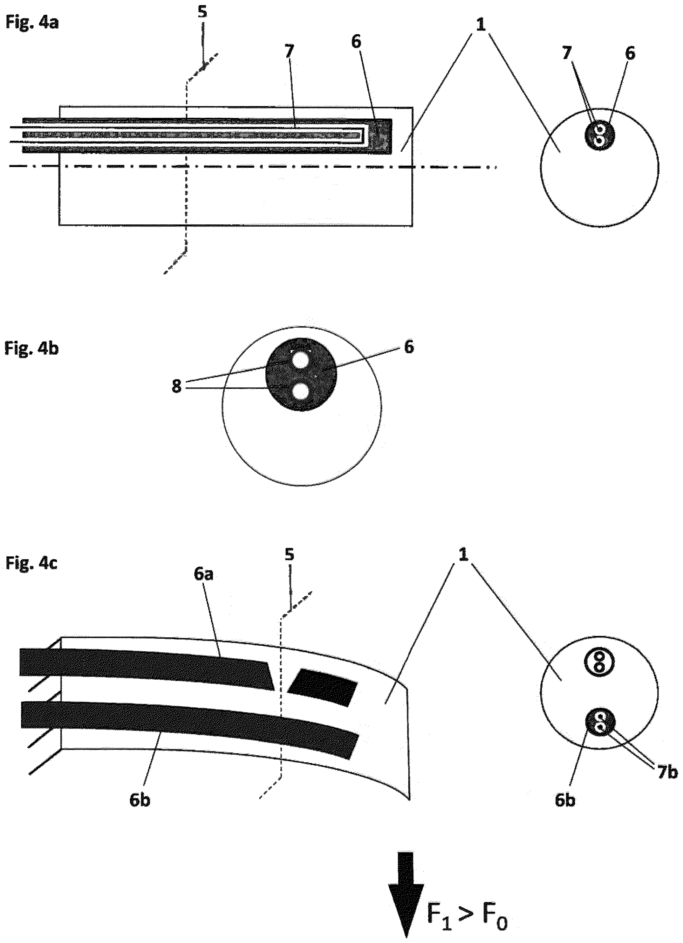

In Fig. 4a ist eine vereinfachte schematische Darstellung einer weiteren beispielhaften Ausführungsform des erfindungsgemäßen Gussbauteils dargestellt. Hierbei ist wiederum in der rechten Abbildung eine Schnittanschicht an der in der linken Abbildung markierten Schnittebene 5 dargestellt. Das in Fig. 4a dargestellte Gussbauteil unterscheidet sich von dem in Fig. 1a dargestellten Gussbauteil im Wesentlichen dadurch, dass der in Form eines Kurzschlusselementes ausgebildete Sensor ein elektrisch isolierendes Hohlelement 6 als elektrisch isolierende Komponente umfasst, in welchem ein elektrischer Leiter 7 als die elektrisch leitfähige Komponente verläuft. Das Hohlelement 6 mit dem darin verlaufenden elektrischen Leiter 7 ist in den Gussgrundkörper eingegossen. Das Hohlelement 6 kann beispielsweise aus Keramik oder vergleichsweise spröden Werkstoffen bestehen. Durch eine bestimmte mechanische Belastung bzw. Verformung des Gussbauteils bricht das Hohlelement 6, wodurch der elektrische Leiter 7 in zwei Teile geteilt wird.

Fig. 4b zeigt eine Abwandlung der in Fig. 4a dargestellten Ausführungsform, wobei hier lediglich eine Schnittansicht abgebildet ist. Hierbei ist die elektrisch leitfähige Komponente als eine auf der Innenseite des elektrisch isolierenden Hohlelements 6 aufgebrachte elektrisch leitfähige Beschichtung 8 ausgebildet.

In Fig. 4c ist eine weitere Abwandlung der in Fig. 4a dargestellten Ausführungsform gezeigt. Das hier dargestellte Gussbauteil unterscheidet sich von dem in Fig. 4a dargestellten Gussbauteil im Wesentlichen dadurch, dass es zwei Sensoren zur Erkennung mechanischer Belastungen und/oder Verformungen des Gussbauteils umfasst. Jeder der beiden Sensoren ist in Form eines Kurzschlusselementes ausgebildet und umfasst ein elektrisch isolierendes Hohlelement 6a, 6b als elektrisch isolierende Komponente, in welchem der als elektrisch leitfähige Komponente eingesetzte elektrische Leiter 7a, 7b verläuft. Aus Gründen der Übersichtlichkeit sind die elektrischen Leiter 7a, 7b in der linken Abbildung von Fig. 4c nicht dargestellt. Der erste Sensor, welcher das erste elektrisch isolierende Hohlelement 6a und den ersten elektrischen Leiter 7a umfasst, dient zur Erkennung einer ersten Belastungsgrenze, während der zweite Sensor, welcher das zweite elektrisch isolierende Hohlelement 6b und den zweiten elektrischen Leiter 7b umfasst, zur Erkennung einer sich von der ersten Belastungsgrenze unterscheidenden zweiten Belastungsgrenze dient. Die zweite Belastungsgrenze liegt hierbei höher als die erste Belastungsgrenze. Mit anderen Worten wird der elektrische Leiter 7a des ersten Sensors bereits bei einer vergleichsweise niedrigen mechanischen Belastung bzw. Verformung und ein dadurch ausgelöstes Brechen des Hohlelements 6a zerteilt und zeigt somit bereits eine geringe mechanische Belastung bzw. Verformung an, während der elektrische Leiter 7b des zweiten Sensors erst bei einer vergleichsweise höheren mechanischen Belastung bzw. Verformung und ein dadurch ausgelöstes Brechen des Hohlelements 6b zerteilt wird und somit eine hohe mechanische Belastung bzw. Verformung anzeigt.

In Fig. 4c wird gezeigt, wie eine mechanische Belastung in Form der Kraft F₁ auf das Gussbauteil, wodurch sich das Gussbauteil verformt. In Folge der Verformung wird der elektrische Leiter 7a des ersten Sensors in zwei Teile geteilt, wohingegen der elektrische Leiter 7b des zweiten Sensors intakt bleibt. Der erste Sensor registriert somit eine gewisse leichte Verformung des Gussbauteils, wohingegen der zweite Sensor keine Verformung registriert. Auf diese Weise kann der Grad der mechanischen Belastung bzw. Verformung des Gussbauteils zumindest grob abgeschätzt werden, da gemäß dem ersten Sensor zwar eine leichte mechanische Belastung bzw. Verformung vorliegt, gemäß dem zweiten Sensor aber noch keine starke mechanische Belastung bzw. Verformung vorliegt.

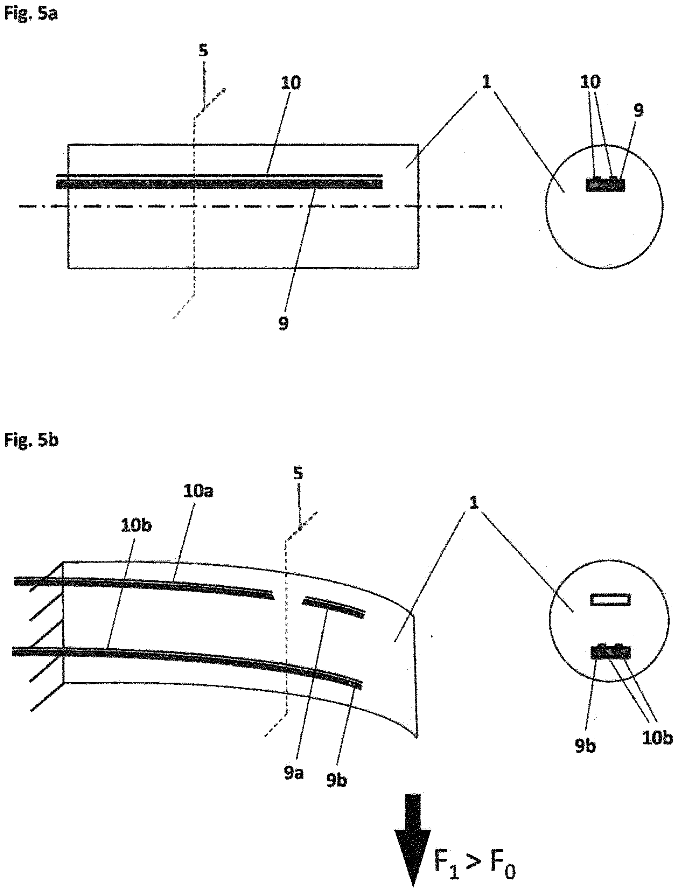

In Fig. 5a ist eine vereinfachte schematische Darstellung einer weiteren beispielhaften Ausführungsform des erfindungsgemäßen Gussbauteils dargestellt. Hierbei ist wiederum in der rechten Abbildung eine Schnittanschicht an der in der linken Abbildung markierten Schnittebene 5 dargestellt. Das in Fig. 5a dargestellte Gussbauteil unterscheidet sich von dem in Fig. 1a dargestellten Gussbauteil im Wesentlichen dadurch, dass das Kurzschlusselement ein Substrat 9 umfasst, auf welchem ein mit der elektrisch isolierenden Komponente gegenüber dem Gussgrundkörper isolierter Schichtleiter 10 als elektrisch leitfähige Komponente aufgebracht ist. Die elektrisch isolierende Komponente ist hierbei als elektrisch isolierende Deckschicht ausgebildet, welche aus Gründen der Übersichtlichkeit nicht in der Abbildung gezeigt ist. Durch eine bestimmte mechanische Belastung bzw. Verformung des Gussbauteils bricht das Substrat 9, wodurch der Schichtleiter 10 in zwei Teile geteilt wird.

In Fig. 5b ist eine Abwandlung der in Fig. 5a dargestellten Ausführungsform gezeigt. Das hier dargestellte Gussbauteil unterscheidet sich von dem in Fig. 5a dargestellten Gussbauteil im Wesentlichen dadurch, dass es zwei Sensoren zur Erkennung mechanischer Belastungen und/oder Verformungen des Gussbauteils umfasst. Jeder der beiden Sensoren ist in Form eines Kurzschlusselementes ausgebildet und umfasst ein Substrat 9a, 9b, auf welchem ein mit der elektrisch isolierenden Komponente gegenüber dem Gussgrundkörper isolierter Schichtleiter 10a, 10b als elektrisch leitfähige Komponente aufgebracht ist, wobei die elektrisch isolierende Komponente hierbei als elektrisch isolierende Deckschicht ausgebildet ist, die nicht aus Gründen der Übersichtlichkeit nicht in der Abbildung gezeigt sind. Der erste Sensor, der das erste Substrat 9a und den ersten Schichtleiter 10a umfasst, dient zur Erkennung einer ersten Belastungsgrenze, während der zweite Sensor, der das zweite Substrat 9b und den zweiten Schichtleiter 10b umfasst, zur Erkennung einer sich von der ersten Belastungsgrenze unterscheidenden zweiten Belastungsgrenze dient. Die zweite Belastungsgrenze liegt hierbei höher als die erste Belastungsgrenze. Mit anderen Worten bricht das Substrat 9a des ersten Sensors bereits bei einer vergleichsweise niedrigen mechanischen Belastung bzw. Verformung, weswegen auch der entsprechende Schichtleiter 10a des ersten Sensors bereits bei dieser niedrigen Belastung bzw. Verformung zerteilt wird. Das Substrat 9b des zweiten Sensors bricht hingegen erst bei einer vergleichsweise höheren mechanischen Belastung bzw. Verformung. Somit wird auch der Schichtleiter 10b des zweiten Sensors erst bei dieser höheren mechanischen Belastung bzw. Verformung zerteilt.

In Fig. 5b wird gezeigt, wie eine mechanische Belastung in Form der Kraft F₁ auf das Gussbauteil wirkt, wodurch sich das Gussbauteil verformt. In Folge der Verformung bricht das Substrat 9a, wodurch der Schichtleiter 10a des ersten Sensors in zwei Teile geteilt wird, wohingegen das Substrat 9b mit dem Schichtleiter 10b des zweiten Sensors intakt bleibt. Die erste Sensor registriert somit eine gewisse leichte Verformung des Gussbauteils, wohingegen der zweite Sensor keine Verformung registriert. Auf diese Weise kann der Grad der mechanischen Belastung bzw. Verformung des Gussbauteils zumindest grob abgeschätzt werden, da gemäß dem ersten Sensor zwar eine leichte mechanische Belastung bzw. Verformung vorliegt, gemäß dem zweiten Sensor aber noch keine starke mechanische Belastung bzw. Verformung vorliegt.

## Patentansprüche

1. Vorrichtung zur Erkennung mechanischer Belastungen und/oder Verformungen in einem Gussbauteil, umfassend ein Gussbauteil sowie ein Steuergerät zur Abgabe eines Signals, wobei das Gussbauteil einen Gussgrundkörper (1) und mindestens einen zumindest teilweise in den Gussgrundkörper eingebetteten Sensor (2, 2a, 2b) zur Erkennung mechanischer Belastungen und/oder Verformungen des Gussbauteils umfasst, wobei das Steuergerät so konfiguriert ist, dass ein Signal abgegeben wird, wenn der mindestens eine Sensor (2, 2a, 2b) eine bestimmte mechanische Belastung und/oder Verformung des Gussbauteils erkennt, wobei der mindestens eine Sensor (2, 2a, 2b) in Form mindestens eines Kurzschlusselements oder in Form mindestens eines Lichtleiters ausgebildet ist, wobei das Kurzschlusselement mindestens eine elektrisch leitfähige Komponente und mindestens eine elektrisch isolierende Komponente, die die mindestens eine elektrisch leitfähige Komponente gegenüber dem Gussgrundkörper elektrisch isoliert, umfasst, wobei der mindestens eine Sensor (2, 2a, 2b) so ausgebildet und angeordnet ist, dass ab der bestimmten mechanischen Belastung und/oder Verformung des Gussbauteils eine elektrische Verbindung oder eine Lichtleitung im mindestens einen Sensor unterbrochen oder hergestellt wird, und wobei aus dem Unterbrechen oder Herstellen der elektrischen Verbindung oder der Lichtleitung das Signal resultiert, welches die Registrierung der bestimmten mechanischen Belastung bzw. Verformung des Gussbauteils durch den Sensor anzeigt.

2. Vorrichtung gemäß Anspruch 1, **dadurch gekennzeichnet, dass** die mindestens eine elektrisch leitfähige Komponente
- ausgewählt ist aus der Gruppe bestehend aus elektrisch leitfähigen Drähten, Leiterbahnen, Geweben, Halbleitern, Schichtleitern, elektrisch leitfähigen Pasten, elektrisch leitfähigen Beschichtungen, Hybridmaterialien mit Anteilen elektrisch leitfähiger Partikel sowie Mischungen und Kombinationen hiervon, und/oder
- als Gewebestruktur oder als Hybridmaterial mit Anteilen elektrisch leitfähiger Partikel ausgebildet ist, wobei die Gewebestruktur bzw. das Hybridmaterial ab einer bestimmten mechanischen Verformung des Gussbauteils so verformt wird, dass sich der elektrische Widerstand der Gewebestruktur bzw. des Hybridmaterials ändert, und/oder
- ein Material enthält oder hieraus besteht, welches ausgewählt ist aus der Gruppe bestehend aus Kupfer, Aluminium, Stahl, Eisen, Silber, Gold, Zinn, Zink.

3. Vorrichtung gemäß einem der vorhergehenden Ansprüche, **dadurch gekennzeichnet, dass** die mindestens eine elektrisch isolierende Komponente
- ausgewählt ist aus der Gruppe bestehend aus elektrisch isolierenden Beschichtungen, elektrisch isolierenden Ummantelungen, elektrische isolierenden Hohlelementen, vorzugsweise elektrisch isolierenden Rohren, sowie Mischungen und Kombinationen hiervon, und/oder
- ein Material enthält oder hieraus besteht, welches ausgewählt ist aus der Gruppe bestehend aus Silikon, Siloxan, Polyimid, Polyamidimid, Polyetheretherketon, Polyetherimid, Polyurethan, Liquid Crystal Polymer, Keramik, elektrisch isolierenden Oxiden und Mischungen hiervon.

4. Vorrichtung gemäß einem der vorhergehenden Ansprüche, **dadurch gekennzeichnet, dass** das mindestens eine Kurzschlusselement
- mindestens einen elektrisch leitfähigen Draht (3) als elektrisch leitfähige Komponente umfasst, welcher mit einer elektrisch isolierenden Ummantelung (4) als elektrisch isolierende Komponente ummantelt ist, und/oder
- ein Substrat (9, 9a, 9b), vorzugsweise eine Platine, umfasst, auf welchem mindestens eine mit der elektrisch isolierenden Komponente gegenüber dem Gussgrundkörper isolierte Leiterbahn als elektrisch leitfähige Komponente oder mindestens ein mit der elektrisch isolierenden Komponente gegenüber dem Gussgrundkörper isolierter Schichtleiter (10, 10a, 10b) als elektrisch leitfähige Komponente aufgebracht ist, und/oder
- mindestens ein elektrisch isolierendes Hohlelement (6, 6a, 6b), vorzugweise ein elektrisch isolierendes Rohr, als elektrisch isolierende Komponente umfasst, in welchem die elektrische leitfähige Komponente verläuft, wobei die elektrisch leitfähige Komponente vorzugsweise ein innerhalb des elektrische isolierenden Hohlelements (6, 6a, 6b) angeordneter elektrischer Leiter (7, 7a, 7b) oder eine auf der Innenseite des elektrisch isolierenden Hohlelements (6) aufgebrachte elektrisch leitfähige Paste oder elektrisch leitfähige Beschichtung (8) ist.

5. Vorrichtung gemäß einem der vorhergehenden Ansprüche, **dadurch gekennzeichnet, dass**
- das Gussbauteil ein Kontaktierungselement zur Kontaktierung des Kurzschlusselements umfasst, wobei das Kontaktierungselement vorzugsweise ausgewählt ist aus der Gruppe bestehend aus Kabeln, Steckverbindern, Elementen zur kabellosen Verbindung, z.B. mittels induktiver Kopplung oder Funk sowie Kombinationen hiervon, und wobei das Kontaktierungselement vorzugsweise kraft- oder formschlüssig, klebetechnisch oder stoffschlüssig mit dem Kurzschlusselement verbunden ist, und/oder
- der mindestens eine Sensor (2, 2a, 2b) in einem Bereich des Gussbauteils angeordnet ist, der bei einer Verwendung des Gussbauteils einer mechanischen Belastung ausgesetzt ist, die zu einer geometrischen Verformung des Gussbauteils führen kann.

6. Vorrichtung gemäß einem der vorhergehenden Ansprüche, **dadurch gekennzeichnet, dass** der Gussgrundkörper (1) ein Material enthält oder hieraus besteht, welches ausgewählt ist aus der Gruppe bestehend aus
- Metallen, vorzugsweise Aluminium, Magnesium, Stahl, Gusseisen, Kupfer, Zink, Zinn,
- Kunststoffen, vorzugsweise Thermoplasten, Duroplasten, Elastomeren, besonders bevorzugt PA, PC, PP, ABS, PET, PEEK, PI, PAI, Epoxidharz,
- Faserverbundkunststoffen, vorzugsweise Glasfaserverbundkunststoff oder Kohlefaserverbundkunststoff, deren Matrixmaterial bevorzugt auf Epoxidharz basiert und gießtechnisch in die Faserzwischenräume infiltriert ist,
- Keramiken,
- zementgebundenen Werkstoffen, vorzugsweise Beton,
- sowie Mischungen und Kombinationen hiervon.

7. Vorrichtung gemäß einem der vorhergehenden Ansprüche, **dadurch gekennzeichnet, dass** das Gussbauteil mindestens zwei in den Gussgrundkörper (1) eingebettete Sensoren (2a, 2b) zur Erkennung mechanischer Belastungen und/oder Verformungen des Gussbauteils umfasst, wobei die mindestens zwei Sensoren (2a, 2b) mindestens einen ersten Sensor (2a) zur Erkennung einer ersten Belastungsgrenze und mindestens einen zweiten Sensor (2b) zur Erkennung einer sich von der ersten Belastungsgrenze unterscheidenden zweiten Belastungsgrenze umfassen.

8. Vorrichtung gemäß einem der vorhergehenden Ansprüche, **dadurch gekennzeichnet, dass** das Gussbauteil mindestens drei in den Gussgrundkörper (1) eingebettete Sensoren zur Erkennung mechanischer Belastungen und/oder Verformungen des Gussbauteils umfasst, wobei die mindestens drei Sensoren mindestens einen ersten Sensor zur Erkennung einer ersten Belastungsgrenze, mindestens einen zweiten Sensor zur Erkennung einer über der ersten Belastungsgrenze liegenden zweiten Belastungsgrenze und mindestens einen dritten Sensor zur Erkennung einer über der ersten und der zweiten Belastungsgrenze liegenden dritten Belastungsgrenze umfassen, so dass durch die mindestens drei Sensoren eine skalierte Anzeige der mechanischen Belastung des Gussbauteils ermöglicht wird.

9. Verwendung einer Vorrichtung gemäß einem der Ansprüche 1 bis 8 zur Überwachung von Belastungszuständen und/oder zur Erkennung von Überlast bzw. Missbrauchslast in Fahrzeugen, vorzugsweise Kraftfahrzeugen, z.B. Personenkraftwagen, Lastkraftwagen, Motorrädern, Booten, Landmaschinen, Fahrzeugen der Luft- und Raumfahrt, Schienenfahrzeugen, in Maschinen, z.B. Kränen, Bearbeitungsmaschinen, Windrädern, in Bauwerken, z.B. Brücken.

10. Verwendung gemäß Anspruch 9, **dadurch gekennzeichnet, dass** das Gussbauteil in einem Fahrzeug oder Transportmittel, vorzugsweise in einem autonom fahrenden Fahrzeug oder sich autonom bewegenden Transportmittel, angeordnet ist und das Signal ein Warn- und/oder Steuersignal zur Vermeidung von Beschädigung, Fehlverhalten, Versagen und/oder Unfällen bei der Nutzung des Fahrzeugs oder Transportmittels ist.

## Claims

1. Device for detecting mechanical loads and/or deformations in a cast component, comprising a cast component and a control device for outputting a signal, wherein the cast component comprises a cast base body (1) and at least one sensor (2, 2a, 2b) at least partly embedded into the cast base body for detecting mechanical loads and/or deformations of the cast component, wherein the control device is configured such that a signal is output when the at least one sensor (2, 2a, 2b) detects a specific mechanical load and/or deformation of the cast component, wherein the at least one sensor (2, 2a, 2b) is in the form of at least one short-circuit element or in the form of at least one optical conductor, wherein the short-circuit element comprises at least one electrically conductive component and at least one electrically insulating component, which electrically insulates the at least one electrically conductive component from the cast base body, wherein the at least one sensor (2, 2a, 2b) is configured and arranged such that, from the specific mechanical load and/or deformation of the cast component, an electrical connection or a light conduction in the at least one sensor is interrupted or established, and wherein the interruption or establishment of the electrical connection or the light conduction results in the signal which indicates the registration of the specific mechanical load or deformation of the cast component by the sensor.

2. Device according to claim 1, **characterized in that** the at least one electrically conductive component
- is selected from the group consisting of electrically conductive wires, conductor tracks, fabrics, semiconductors, layered conductors, electrically conductive pastes, electrically conductive coatings, hybrid materials with portions of electrically conductive particles and mixtures and combinations thereof, and/or
- is configured as a fabric structure or as hybrid material with portions of electrically conductive particles, wherein the fabric structure or the hybrid material is deformed from a specific mechanical deformation of the cast component so that the electrical resistance of the fabric structure or the hybrid material changes, and/or
- contains or consists of a material which is selected from the group consisting of copper, aluminum, steel, iron, silver, gold, tin, zinc.

3. Device according to any one of the preceding claims, **characterized in that** the at least one electrically insulating component
- is selected from the group consisting of electrically insulating coatings, electrically insulating sheaths, electrically insulating hollow elements, preferably electrically insulating tubes, as well as mixtures and combinations thereof, and/or
- contains or consists of a material, which is selected from the group consisting of silicone, siloxane, polyimide, polyamide-imide, polyether ether ketone, polyetherimide, polyurethane, liquid crystal polymer, ceramic, electrically insulating oxides and mixtures thereof.

4. Device according to any one of the preceding claims, **characterized in that** the at least one short-circuit element
- comprises at least one electrically conductive wire (3) as an electrically conductive component which is sheathed by an electrically insulating sheath (4) as an electrically insulating component, and/or
- comprises a substrate (9, 9a, 9b), preferably a circuit board, on which at least one conductor track insulated by the electrically insulating component from the cast base body is applied as an electrically conductive component or at least one layered conductor (10, 10a, 10b) insulated by the electrically insulating component from the cast base body is applied as an electrically conductive component, and/or
- comprises at least one electrically insulating hollow element (6, 6a, 6b), preferably an electrically insulating tube, as an electrically insulating component, in which the electrically conductive component extends, the electrically conductive component preferably being an electrical conductor (7, 7a, 7b) arranged inside the electrically insulating hollow element (6, 6a, 6b) or an electrically conductive paste or electrically conductive coating (8) applied to the inside of the electrically insulating hollow element (6).

5. Device according to any one of the preceding claims, **characterized in that**
- the cast component comprises a contacting element for contacting the short-circuit element, the contacting element preferably being selected from the group consisting of cables, plug connectors, elements for wireless connection, e.g. by means of inductive coupling or radio and combinations thereof, and wherein the contacting element is preferably connected to the short-circuit element in a force or form-fitting, adhesive or material bonding manner, and/or
- the at least one sensor (2, 2a, 2b) is arranged in a region of the cast component, which when the cast component is used is subjected to a mechanical load which can result in a geometric deformation of the cast component.

6. Device according to any one of the preceding claims, **characterized in that** the cast base body (1) contains or consists of a material which is selected from the group consisting of
- metals, preferably aluminum, magnesium, steel, cast iron, copper, zinc, tin,
- plastics, preferably thermoplastics, thermosetting plastics, elastomers, particularly preferably PA, PC, PP, ABS, PET, PEEK, PI, PAI, epoxy resin,
- fiber composite plastics, preferably glass fiber composite plastic or carbon fiber composite plastic, whose matrix material is preferably based on epoxy resin and is infiltrated into the fiber interstices by casting,
- ceramics,
- cement-bonded materials, preferably concrete,
- and mixtures and combinations thereof.

7. Device according to any one of the preceding claims, **characterized in that** the cast component comprises at least two sensors (2a, 2b) embedded into the cast base body (1) for detecting mechanical loads and/or deformations of the cast component, wherein the at least two sensors (2a, 2b) comprise at least one first sensor (2a) for detecting a first load limit and at least one second sensor (2b) for detecting a second load limit which differs from the first load limit.

8. Device according to any one of the preceding claims, **characterized in that** the cast component comprises at least three sensors embedded into the cast base body (1) for detecting mechanical loads and/or deformations of the cast component, wherein the at least three sensors comprise at least one first sensor for detecting a first load limit, at least one second sensor for detecting a second load limit lying above the first load limit and at least one third sensor for detecting a third load limit lying above the first and second load limits, so that a scaled display of the mechanical load on the cast component is made possible by the at least three sensors.

9. Use of a device according to any one of the claims 1 to 8 for monitoring load conditions and/or for detecting overload or misuse of load in vehicles, preferably motor vehicles, e.g. passenger cars, trucks, motorcycles, boats, agricultural machinery, aerospace vehicles, rail vehicles, in machines, e.g. cranes, processing machines, wind turbines, in structures, e.g. bridges.

10. Use according to claim 9, **characterized in that** the cast component is arranged in a vehicle or means of transport, preferably in an autonomous vehicle or autonomous means of transport and the signal is a warning and/or control signal for preventing damage, malfunction, failure and/or accidents with the use of the vehicle or means of transport.

## Revendications

1. Dispositif pour détecter des charges et/ou déformations mécaniques dans une pièce coulée, comprenant une pièce coulée et un dispositif de commande pour émettre un signal, la pièce coulée comportant un corps de base coulé (1) et au moins un capteur (2, 2a, 2b) au moins partiellement intégré dans le corps de base coulé pour détecter des charges et/ou déformations mécaniques de la pièce coulée, le dispositif de commande étant configuré de telle sorte qu'un signal soit émis lorsque le au moins un capteur (2, 2a, 2b) détecte une certaine charge et/ou déformation mécanique de la pièce coulée, le au moins un capteur (2, 2a, 2b) étant conçu sous la forme d'au moins un élément de court-circuit ou sous la forme d'au moins un guide de lumière, l'élément de court-circuit comprenant au moins un composant électriquement conducteur et au moins un composant électriquement isolant qui isole électriquement le au moins un composant électriquement conducteur du corps de base coulé, le au moins un capteur (2, 2a, 2b) étant conçu et agencé de telle sorte qu'à partir d'une certaine charge et/ou déformation mécanique de l'élément coulé, une connexion électrique ou une ligne de lumière soit interrompue ou établie dans au moins un capteur, et l'interruption ou l'établissement de la connexion électrique ou de la ligne de lumière aboutissant au signal qui indique l'enregistrement de la certaine charge ou déformation mécanique de la pièce moulé par le capteur.

2. Dispositif selon la revendication 1, **caractérisé en ce que** le au moins un composant électriquement conducteur
- est choisi dans le groupe constitué de fils électriquement conducteurs, de pistes conductrices, de tissus, de semi-conducteurs, de couches conductrices, de pâtes électriquement conductrices, de revêtements électriquement conducteurs, de matériaux hybrides avec des parties de particules électriquement conductrices, et des mélanges et combinaisons de ceux-ci, et/ou
- est conçu sous la forme d'une structure en tissu ou sous la forme d'un matériau hybride avec des parties de particules électriquement conductrices, la structure en tissu ou le matériau hybride étant déformé(e) à partir d'une certaine déformation mécanique de la pièce coulée de telle sorte que la résistance électrique de la structure en tissu ou du matériau hybride change, et/ou
- contient ou est constitué d'un matériau choisi dans le groupe constitué du cuivre, de l'aluminium, de l'acier, du fer, de l'argent, de l'or, de l'étain et du zinc.

3. Dispositif selon l'une quelconque des revendications précédentes, **caractérisé en ce que** le au moins un composant électriquement isolant
- est choisi dans le groupe constitué par des revêtements électriquement isolants, des gaines électriquement isolantes, des éléments creux électriquement isolants, de préférence des tubes électriquement isolants, ainsi que des mélanges et combinaisons. de ceux-ci, et/ou
- contient ou est constitué d'un matériau qui est choisi dans le groupe constitué du silicone, du siloxane, du polyimide, du po-lyamideimide, de la polyétheréthercétone, du polyétherimide, du polyuréthane, du polymère à cristaux liquides, de la céramique, des oxydes électriquement isolants et de mélanges de ceux-ci.

4. Dispositif selon l'une quelconque des revendications précédentes, **caractérisé en ce que** le au moins un élément de court-circuit
- comprend au moins un fil électriquement conducteur (3) en tant que composant électriquement conducteur, qui est recou-vert d'une gaine électriquement isolante (4) en tant que composant électriquement isolant, et/ou
- comprend un substrat (9, 9a, 9b), de préférence une carte de circuit imprimé, sur laquelle au moins une piste conductrice est isolée avec le composant électriquement isolant par rapport au corps de base coulé en tant que composant électriquement conducteur, ou au moins une couche conductrice isolée avec le composant électriquement isolant par rapport au corps de base coulé (10, 10a, 10b) est appliquée en tant que composant électriquement conducteur, et/ou
- comprend au moins un élément creux électriquement isolant (6, 6a, 6b), de préférence un tube électriquement isolant, en tant que composant électriquement isolant, dans lequel s'étend le composant électriquement conducteur, le composant électriquement conducteur étant de préférence un conducteur électrique (7, 7a, 7b) agencé à l'intérieur de l'élément creux électriquement isolant (6, 6a, 6b) ou une pâte électriquement conductrice ou un revêtement électriquement conducteur (8) appliqué(e) à l'intérieur de l'élément creux électriquement isolant (6).

5. Dispositif selon l'une quelconque des revendications précédentes, **caractérisé en ce que**
- le composant coulé comprend un élément de contact pour un contact avec l'élément de court-circuit, l'élément de contact étant de préférence choisi dans le groupe constitué de câbles, de connecteurs enfichables, d'éléments pour une connexion sans fil, par exemple au moyen d'un couplage inductif ou d'une radio et de combinaisons de ceux-ci, et dans lequel l'élément de contact est de préférence non positif ou positif, est relié de manière adhésive ou matérielle à l'élément de court-circuit, et/ou
- le au moins un capteur (2, 2a, 2b) est agencé dans une zone de la pièce coulée qui est exposée à une charge mécanique lors de l'utilisation de la pièce coulée, ce qui peut conduire à une déformation géométrique de la pièce coulée.

6. Dispositif selon l'une des revendications précédentes, **caractérisé en ce que** le corps de base coulé (1) contient ou est constitué d'un matériau qui est choisi dans le groupe constitué
- de métaux, de préférence aluminium, magnésium, acier, fonte, cuivre, zinc, étain,
- de matières plastiques, de préférence thermoplastiques, thermodurcissables, élastomères, de manière particulièrement préférée PA, PC, PP, ABS, PET, PEEK, PI, PAI, résine époxy,
- de matières plastiques composites à base de fibres, de préférence de matières plastiques composites à base de fibres de verre ou de matières plastiques composites à base de fibres de carbone, dont le matériau de matrice est de préférence à base de résine époxy et est infiltré par coulée dans les interstices des fibres,
- de céramique,
- de matériaux liés au ciment, de préférence du béton,
- et de mélanges et combinaisons de ceux-ci.

7. Dispositif selon l'une des revendications précédentes, **caractérisé en ce que** la pièce coulée comprend au moins deux capteurs (2a, 2b) intégrés dans le corps de base coulé (1) pour détecter des charges et/ou déformations mécaniques de la pièce coulée, les au moins deux capteurs (2a, 2b) comprenant au moins un premier capteur (2a) pour détecter une première limite de charge et au moins un second capteur (2b) pour détecter une seconde limite de charge qui diffère de la première limite de charge.

8. Dispositif selon l'une des revendications précédentes, **caractérisé en ce que** la pièce coulée comprend au moins trois capteurs intégrés dans le corps de base coulé (1) pour détecter des charges et/ou déformations mécaniques de la pièce coulée, les au moins trois capteurs comprenant au moins un premier capteur pour détecter une première limite de charge, au moins un deuxième capteur pour détecter une deuxième limite de charge située au-dessus de la première limite de charge, et au moins un troisième capteur pour détecter une troisième limite de charge située au-dessus de la première et de la deuxième limite de charge, de telle sorte que les au moins trois capteurs permettent un affichage à l'échelle de la charge mécanique sur la pièce coulée.

9. Utilisation d'un dispositif selon l'une des revendications 1 à 8 pour surveiller des conditions de charge et/ou pour détecter une surcharge ou une charge abusive dans des véhicules, de préférence des véhicules automobiles, par exemple des voitures particulières, des camions, des motos, des bateaux, des machines agricoles, des véhicules aérospatiaux, des véhicules ferroviaires, dans des machines, par exemple des grues, des machines de traitement, des éoliennes, dans des structures, par exemple des ponts.

10. Utilisation selon la revendication 9, **caractérisée en ce que** l'élément coulé est agencé dans un véhicule ou un moyen de transport, de préférence dans un véhicule à conduite autonome ou un moyen de transport à déplacement autonome, et le signal est un signal d'avertissement et/ou de commande pour éviter des dommages, fautes, défaillances et/ou accidents lors de l'utilisation du véhicule ou du moyen de transport.
